(19) Europäisches Patentamt
European Patent Office
Office européen des brevets

(11) **EP 2 198 704 B2**

(12) **NEW EUROPEAN PATENT SPECIFICATION**
After opposition procedure

(45) Date of publication and mention
of the opposition decision:
**28.08.2019 Bulletin 2019/35**

(45) Mention of the grant of the patent:
**17.02.2016 Bulletin 2016/07**

(21) Application number: **08022177.3**

(22) Date of filing: **19.12.2008**

(51) Int Cl.:
***A01K 63/04*** *(2006.01)*

(54) **Fish farming process to enrich dissolved oxygen into water**

Fischzuchtprozess zur anreicherung des Wassers mit gelöstem Sauerstoff

Procédé de pisciculture pour enrichir l'eau avec de l'oxygène dissous

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**23.06.2010 Bulletin 2010/25**

(73) Proprietor: **Linde AG**
**80331 München (DE)**

(72) Inventors:
• **Glomset, Karsten**
**6012 Alsund (NO)**
• **Glomset, Kenneth**
**6006 Alesund (NO)**

• **Gjelstenli, Ove**
**6265 Vatne (NO)**
• **Rekkedal, Per**
**6150 Orsta (NO)**

(56) References cited:
**EP-A1- 0 506 587    JP-A- 2008 126 226**
**US-A- 4 226 719    US-A- 4 749 493**
**US-A- 6 155 794    US-A1- 2005 218 533**
**US-B1- 6 912 972**

• **DATABASE WPI Week 200843 Thomson Scientific, London, GB; AN 2008-G78261 XP002531420 -& JP 2008 126226 A (ARIGA G; ARIGA H) 5 June 2008 (2008-06-05)**

**Description**

The present invention relates to a process for supplying gas into water in sea cages, tanks or ponds with a pump and a dissolver for contacting the gas with the water.

In aquaculture or at hatcheries it is important that the content of dissolved oxygen in the water is kept high. This is necessary for the health and the growing of the fishes. Because the solubility of gases in water is reduced by increasing the temperature while the oxygen need of the fish is increasing at high temperature, there is a particularly great need for oxygen in warm periods. Increasing the capacity of oxygen dissolvers is, therefore, highly useful for the fish farmer. In addition, most of the fish hatcheries produce more fish per liter water than the installation originally was dimensioned for. The amount of water is, therefore, the limiting factor of the installation. A better utilization of the water, a higher consumption of the oxygen and an improved dissolving capacity are therefore required.

Most hatcheries use pressurized oxygen dissolvers with a working pressure of 1-4 bars. By small amounts of water, it is normal to let all of the water flow go through the dissolver, but most commonly there is an outlet leading a part of the flow from the main pipe to a booster pump which pressurizes the dissolver. The oxygenated water is thereafter led back to the main pipe where it is mixed with untreated water. Most dissolving systems use 0 - 2, 5 kWh per kilo $O_2$ dissolved depending of efficiency. Injectors in combination with pressurized $O_2$ dissolvers are not common in Norway. The injectors which have been used have given a relatively small increase in the capacity, a great loss of pressure and increased consumption of energy.

US 2005/0275119A1 describes an oxygenating nozzle unit for the injection of gas in a liquid flow. The arrangement can for example be mounted on any pipe transporting liquid and with a need for the supply of gas, for example on the pipe supply to the basin for the farming of fish, on the pipe after circulation pump on a boat for live fish transportation, on the pipe after a circulation pump for vehicles for live fish transportation, on the pipe after a circulation pump on a container or other arrangement for live fish transportation or on pressurized dissolvers for increasing the oxygenating capacity. The known venturi system generates micro bubbles in the water. By the means of gas diffusion and redistribution of dissolved gas components in water one can dissolve and add gas at a very low pressure, preferred for sea water applications.

US 6 155 794 A discloses an aquacultural device for supplying gas into water in sea cages, tanks or pond according to the preamble of independent claim 1. US 4 749 493 A discloses an apparatus comprising a floating columnar housing for oxygenating water in an aquaculture system without adding nitrogen or other possibly harmful gases. US 6 912 972 B1 discloses a water aerating device for an aquarium comprising a container fixed by means of suction cups to a wall of the aquarium. JP 2008126226 A discloses an aeration apparatus comprising an air injector connected to a submersible pump.

It's an object of the invention to increase the oxygen level in the water. A second object is to ease the handling and the installation or removal when needed.

These objects are solved by a process with the features of claim 1. The depending claims disclose embodiments of the invention.

The invention proposes the use of a submerged pump. By making an installation where we combine a common venturi dissolver with a submerged pump and an outlet device, we can oxygenate the water in sea cages, tanks or ponds in a very easy and effective way. According to the invention the process dissolves pressurized oxygen in water. Oxygen means pure oxygen, technical pure oxygen (90-96% $O_2$) or oxygen enriched air (oxygen content of > 20 %). The oxygen can be stored in bottles, bundles or tanks, possible under pressure or in liquid state. In the latter case an evaporator is commonly used. The oxygen can be delivered to the dissolver by a flexible hose or tube.

All types of pumps can be used, which are able to move or pump a liquid like water. Preferred is the use of an electrical or a mechanical driven pump. Immersion pumps with a sealed electric motor and a rotating element (centrifugal pump) are common knowledge and widely used in sewing lifting installations. Piston pumps are also applicable. For industrial aquaculture use the power input should be greater than 100 Watt. More preferred are pumps with more than 300 W, also in the region of 0,5 or 1 kW or some kW power consumption. Rough power oxygen proportion is 1 : 10 (1 kW brings in 10 kg oxygen). Electric driven mechanical pumps with pistons or blades are better suited than Löscher pumps. The pump preferably sucks directly water from the tank wherein it is immerged. This saves an intake line or equivalent installations. The idea of the invention is to distribute oxygenated water instead of pure oxygen gas bubbles directly into the sea cage, tank or pond.

According to the invention the pump and the dissolver (and if desired the outlet) are in direct contact which leads to a submergible, watertight unit. The unit is made by combining the elements into one sealed housing. With this invention it is possible to

- Get satisfactory oxygen levels in sea cages, tanks or ponds.
- Create satisfactory oxygen levels where needed in the sea cages, tanks or ponds.
- Help handle the fish inside the sea cage/tank when e.g. emptying the cages, tanks or ponds.

- Create a plug and play solution, easy to handle, to install or remove in a sea cage tank or pond when needed and where needed.
- Supply oxygen and water movement during parasite treatment or vaccination.
- Reduce waste of fish feed at elevated oxygen levels.
- Reduce stress and mortality on fish and shellfish at elevated oxygen levels.
- Increase fish welfare and generally reduce problems with fish health/decease.
- Reduce environmental pollution caused by better conversion of feed to flesh at elevated oxygen levels.
- Increase growth rate on fish and shellfish.
- Give the user a more easy handle and controllable oxygenating system with high capacity.
- Help the user to easy control the fish inside the sea cages, tanks or ponds.

The invention helps to eliminate the following problems on existing technology:

- Low oxygen level in sea cage, tank or ponds.
- Loss of oxygen caused by oxygenating areas with no fish.
- Low dissolved oxygen situations during vaccination or parasite treatment.

The invention shows following advantages:

- Increased oxygen level
- Reduced mortality of fish
- Introduction of oxygen in a mixture of oxygen and water
- Higher efficiency
- Easier handling.

Some methods for introducing oxygen into water, distributes "pure" oxygen bubbles directly into the fish basin (diffusers). If it is negative for fish to be in direct contact with "pure" oxygen bubbles, in terms of possible reduction of slime layer and/or burning of gill filaments, this new invention will differentiate from that as this solution introduces oxygen enriched water instead of the "pure" gas bubbles directly.

In a preferred embodiment the water outlet is a nozzle. With this nozzle it is possible to move the fish to desired spots in the sea cage, tank or pond by moving the nozzle in different directions. The fish is gathered in front of the invention so that the fish is easier to suck into a vacuum fish pump. Possible is increased oxygen content in fish transport hoses from the cage/tank to the processing plant. The invention is easy to handle and to mount or remove in a sea cage, tank or pond when needed.

The water outlet of the invention can also be a perforated hose, a tube with holes or any equivalent component, which distributes the oxygenated water under slight overpressure in the cage in a desired distribution.

According to the invention the submerged unit has on his top an eye or a hook or a hanger for hanging the device on a rope or a chain and submerging it easy into the cage to a desired position.

Areas of application can be in all situations where water needs to be added oxygen in a tank/pool/basin preferably in breeding of fish or other organisms living in water (e.g. shrimps, mussels, crabs, lobsters or shellfish). The normal temperature range where the invention can be used is in the range between 0 - 30 °C; the submergible unit is made to operate completely submerged.

The invention will be described in more detail by the use of some drawings. Figure 1 to figure 4 show some embodiments of an aquacultural device. Figures 5 and 6 show two aquacultural devices arranged in sea cages.

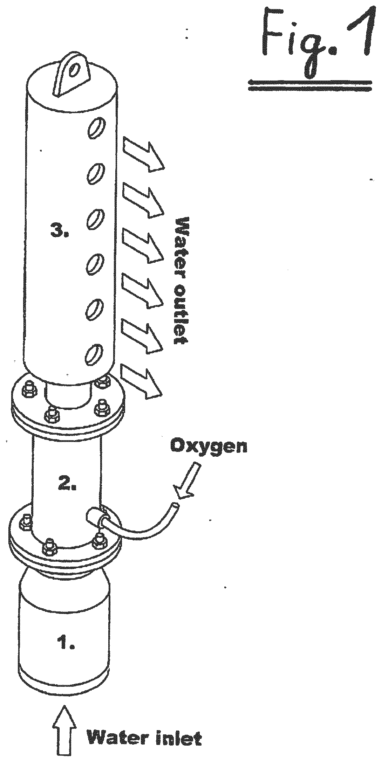

Figure 1 shows an aquacultural device consisting of a water pump 1, a dissolver 2 and a water outlet 3, which here is designed as a tube with holes. All three elements 1, 2, 3 are combined with flanges with one another and can so be mounted and dismounted very easily. On the top of the water outlet 3 there is an eye for hooking the unit. The water is sucked in at the bottom (water inlet); the water outlet is at the top and in this embodiment directed in a horizontal direction. The oxygen is fed with a flexible hose or pipe to the dissolver 2. Not shown is an electrical cable for feeding the electrical pump 1.

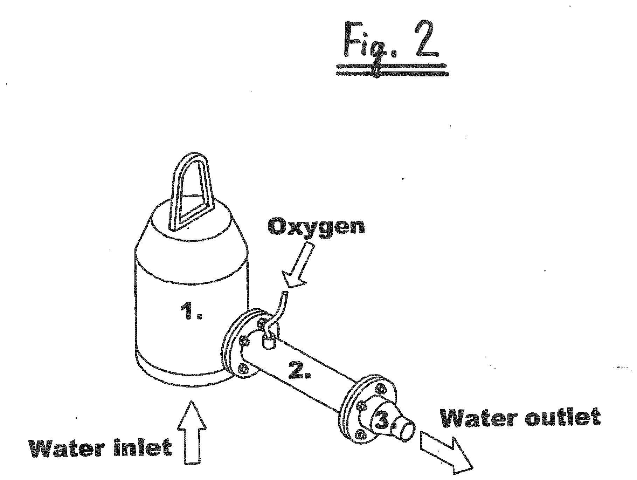

Figure 2 shows another embodiment of an aquacultural device. The pump 1, the dissolver 2 and the water outlet 3 are mounted by flanges together to one unit. In this embodiment the water outlet is a nozzle which directs a water jet in a horizontal direction.

Both figure 1 and 2 are made to both oxygenate and create a current. One of the advantages of both embodiments is that one can get the fish inside the sea cage/tank to move against the current created by the water outlet nozzle. This makes it possible to easy handle the fish when emptying the sea cage, tank or pond. The fish will try to go upstream of the current created by the nozzle and will, therefore, get the best environment regarding oxygen levels and water quality. This can be a huge advantage especially in holding cages/tanks at the harvesting plants where one wants the fish to move to where it can be taken out of the cages or tanks.

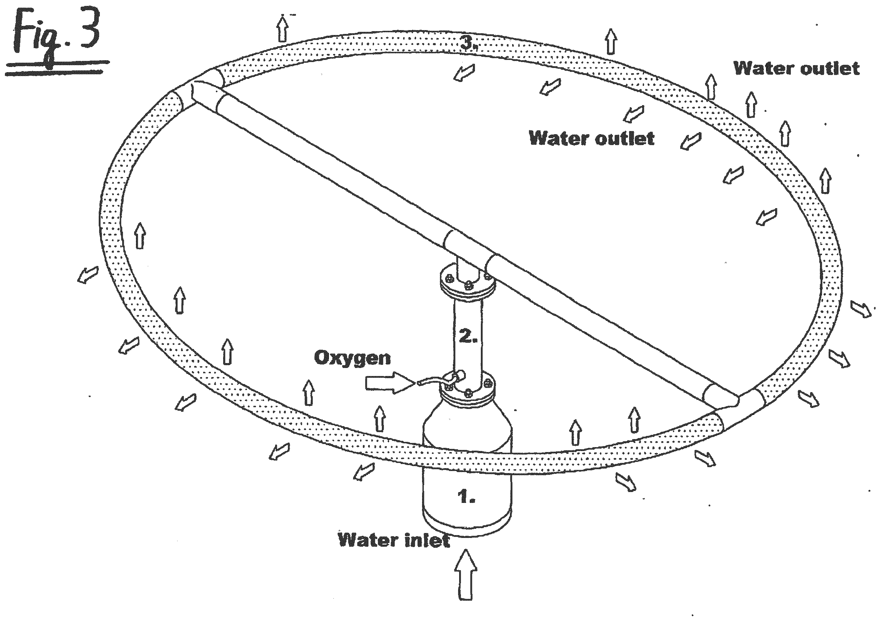

Figure 3 shows another embodiment where the pump 1 and the dissolver 2 are the same as in figure 1. The water outlet 3 is here made as an oxygen dissolver consisting of a perforated hose which is arranged in a circular way to have a very wide field of distribution of oxygen in any direction. The oxygenated water can be dissolved in horizontal and vertical directions.

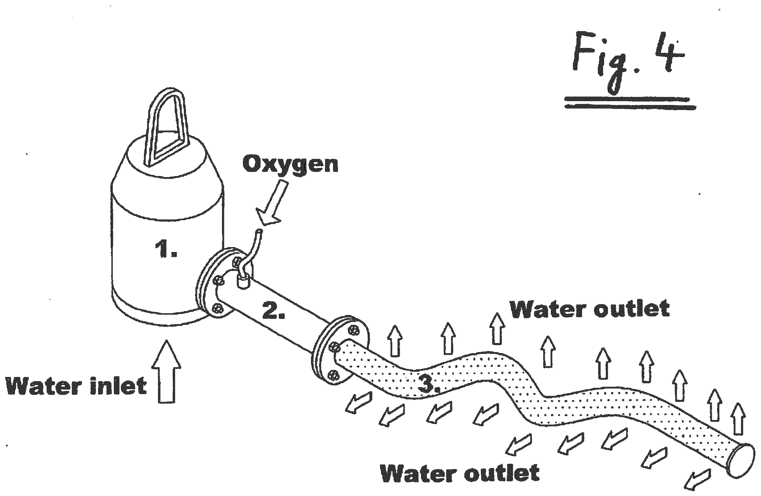

Figure 4 shows another embodiment where the water outlet 3 is a flexible hose which is floating in the cage at desired depth. The embodiments of figures 3 and 4 are more focused on dissolving oxygen at low pressure and low energy costs. This is used in cages, tanks or ponds where the main goal is to create satisfactory oxygen levels and not creating current. These embodiments are mainly considered useful when satisfactory oxygen levels at all times during ongoing production cycles or in special situations as vaccination or parasite treatment are desired.

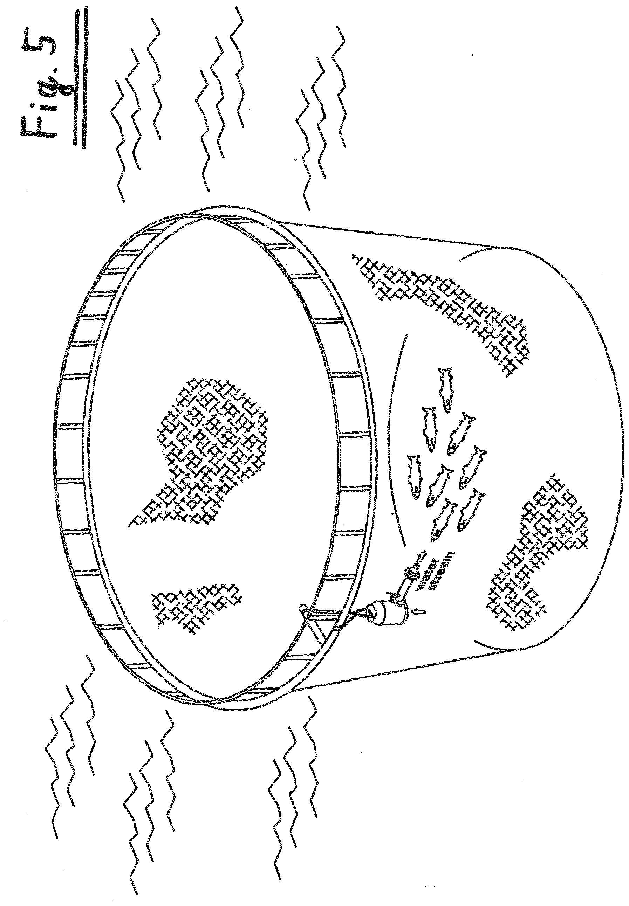

Figure 5 shows an embodiment arranged in an open sea cage. The embodiment is hanging on a rope on the inside of a sea cage. The current originated by the nozzle of the water outlet leads to a water flow where the oxygen level is very high. The fishes seek to orient themselves to this very good oxygenated water with desired current. This enhances the efficiency of the device. The embodiment can also be oriented outside the sea cage, then blowing oxygenated water into the cage. It can be situated horizontally or vertically as desired to orient the fish where wanted.

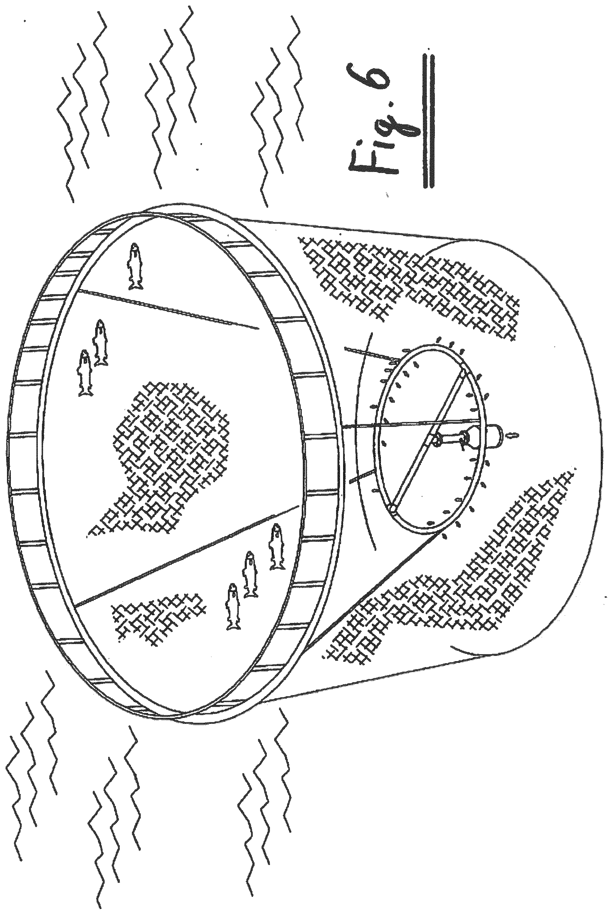

Figure 6 shows an embodiment where the oxygenating device of figure 4 is arranged in a sea water cage with ropes, chains or wires. The arrangement is near the bottom of the sea cage and oxygenates the sea water within a very wide region.

An example for the embodiment of Fig. 2:

Flow 1000 litres/min through the system.
Needed pressure is 0,2 bar.
Introduction of 10 kg 02 per hour.
Power needed 0,5 KW energy. (see calculation below)
Power vs oxygen ratio 0,5 : 10

$$1000 \text{ l/min} / 60 \text{ min/sec} = 16{,}66 \text{ litres/sec} \times 2 \text{ metres} / 102 \text{ (constant)} = 0{,}33 \text{ KW}$$

$$0{,}33 \text{ KW} / 0{,}65 \text{ (65\% efficiency of the pump)} = 0{,}50 \text{ KW needed.}$$

## Claims

1. Fish farming process to enrich dissolved oxygen into water in sea cages, tanks or ponds using a pump (1) and a dissolver (2) for contacting a gas with the water, and a water outlet (3) whereby the pump (1) is a submerged pump (1) sucking directly water from the cage, pond or tank, whereby a direct connection of the pump (1) and the dissolver (2) is made to create a submergible unit, **characterized in that** the gas is pressurized oxygen or oxygen enriched air and that oxygenated water is directly distributed into the sea cage, pond or tank by using a venturi dissolver (2), whereby the pump (1) and the dissolver (2) are combined into one sealed housing whereby the device comprises a hook or eye or other mechanical construction, fixed or adjustable for hanging up the submergible unit.

2. Process according to claim 1, **characterized in that** the pump (1) is an electrical or a mechanical one.

3. Process according to claims 1 or 2, **characterized in that** the water outlet (3) is a nozzle.

4. Process according claims 1 or 2, **characterized in that** the water outlet (3) is a perforated house.

5. Process according claims 1 or 2, **characterized in that** the water outlet (3) is a tube with holes.

## Patentansprüche

1. Fischzuchtverfahren zur Anreicherung von Wasser in schwimmenden Käfigen, Tanks oder Teichen mit gelöstem Sauerstoff unter Verwendung einer Pumpe (1) und einer Lösevorrichtung (2), um ein Gas mit dem Wasser in Berührung zu bringen, und einem Wasserauslass (3), wobei die Pumpe (1) eine Tauchpumpe (1) ist, die Wasser direkt aus dem Käfig, Teich oder Tank saugt, wobei eine direkte Verbindung der Pumpe (1) und der Lösevorrichtung (2) hergestellt wird, um eine tauchbare Einheit zu schaffen, **dadurch gekennzeichnet, dass** es sich bei dem Gas um Drucksauerstoff oder mit Sauerstoff angereicherte Luft handelt und dass sauerstoffangereichertes Wasser unter Verwendung einer Venturi-Lösevorrichtung (2) direkt in den schwimmenden Käfig, Teich oder Tank verteilt wird, wobei die Pumpe (1) und die Lösevorrichtung (2) in einem abgedichteten Gehäuse kombiniert sind, wobei die Vorrichtung einen Haken oder eine Öse oder eine andere festgelegte oder verstellbare mechanische Konstruktion zum Aufhängen der tauchbaren Einheit umfasst.

2.  Verfahren nach Anspruch 1, **dadurch gekennzeichnet, dass** die Pumpe (1) eine elektrische oder eine mechanische Pumpe ist.

3.  Verfahren nach Anspruch 1 oder 2, **dadurch gekennzeichnet, dass** der Wasserauslass (3) eine Düse ist.

4.  Verfahren nach Anspruch 1 oder 2, **dadurch gekennzeichnet, dass** der Wasserauslass (3) ein perforierter Schlauch ist.

5.  Verfahren nach Anspruch 1 oder 2, **dadurch gekennzeichnet, dass** der Wasserauslass (3) ein Rohr mit Löchern ist.

**Revendications**

1.  Procédé de pisciculture pour enrichir de l'oxygène dissous dans l'eau dans des cages marines, des réservoirs ou des bassins à l'acide d'une pompe (1) et d'un dissolveur (2) pour mettre un gaz en contact avec l'eau, et une sortie d'eau (3), la pompe (1) étant une pompe immergée (1) aspirant l'eau directement depuis la cage, le bassin ou le réservoir, une connexion directe de la pompe (1) et du dissolveur (2) étant réalisée pour créer une unité submersible, **caractérisé en ce que** le gaz est de l'oxygène sous pression ou de l'air enrichi en oxygène et que l'eau oxygénée est dispensée diretement dans la cage marine, le réservoir ou le bassin à l'aide d'un dissolveur à venturi (2), la pompe (1) et le dissolveur (2) étant combinés en un boîtier scellé, le dispositif comprenant un crochet ou un oeillet ou une autre construction mécanique, fixée ou ajustable pour accrocher l'unité submergible.

2.  Procédé selon la revendication 1, **caractérisé en ce que** la pompe (1) est une pompe électrique ou mécanique.

3.  Procédé selon la revendication 1 ou 2, **caractérisé en ce que** la sortie d'eau (3) est une buse.

4.  Procédé selon la revendication 1 ou 2, **caractérisé en ce que** la sortie d'eau (3) est un flexible perforé.

5.  Procédé selon la revendication 1 ou 2, **caractérisé en ce que** la sortie d'eau (3) est un tube muni de trous.

Fig.1

3.

Water outlet

Oxygen

2.

1.

Water inlet

Fig. 2

Fig. 3

Fig. 4

Fig. 5

water
stream

EP 2 198 704 B2

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050275119 A1
- US 6155794 A
- US 4749493 A
- US 6912972 B1
- JP 2008126226 A